# EUROPEAN PATENT SPECIFICATION

(11) **EP 1 747 116 B1**
(45) Date of publication and mention of the grant of the patent: **02.07.2008**
(21) Application number: 05741226.4
(22) Date of filing: 10.05.2005
(51) Int. Cl.: B60P 3/00, B60P 3/14, B60P 3/34

(54) **AN EXPANSIBLE AND CONTRACTIBLE WORK ROOM ON A CHASSIS SUPPORTED BY WHEELS**
AUSDEHNBARER UND ZUSAMMENZIEHBARER ARBEITSRAUM AUF EINEM VON RÄDERN GETRAGENEN FAHRGESTELL
ENCEINTE DE TRAVAIL EXPANSIBLE ET RETRACTABLE MONTEE SUR UN CHASSIS SOUTENU PAR DES ROUES

(30) Priority: 17.05.2004 SE 0401262
(43) Date of publication of application: 31.01.2007
(73) Proprietor: Hennix, Lars, S-167 71 Bromma (SE)
(72) Inventor: Hennix, Lars, S-167 71 Bromma (SE)
(74) Representative: Janson, Ronny
(86) International application number: PCT/SE2005/000670
(87) International publication number: WO 2005/110808

(56) References cited:
- EP-A1- 0 065 398
- DE-A1- 19 504 251
- DE-U1- 29 811 749
- FR-A1- 2 777 237
- US-A- 3 792 557

## Description

The invention relates to an expansible and contractible work room on a chassis supported by wheels, of the kind that is seen in the preamble of claim 1.

Such work rooms are at least partly known from, for instance, WO 96/13402, WO 98/18667, US-A-4912892, EP-0-742119-A1, or US-A-5291701 and in particular from EP 0 065 398 A1.

In a construction of the kind that is seen in the preamble of claim 1, there is a problem with partition walls that extend transverse to longitudinal direction/driving direction of the chassis and that in the expanded state bridge over the lateral limits of the basic structure. The problem is associated with the fact that these transverse partition walls have to be foldable around an axis at either side edge, into a position, wherein the wall becomes generally parallel to and located next to either the bottom of the box or a fixed longitudinal structure in the central longitudinal intermediate area of the basic structure, so that the box can be pushed into the basic structure into a position, wherein the bottom of the box substantially coincides with the vertical side wall of the basic structure. Naturally, upon such turning of the partition wall, no annoying interferences must occur between the partition wall upon the folding thereof to and from operational position. Yet the partition wall has to be formed in order to be able to offer a substantially tight screening against the top wall of the box and/or the top wall of the basic structure.

Furthermore, the floor of the work room should form a substantially planar and continuous surface in the expanded state of the work room, and furthermore allow the traversing motions of the boxes between the two end positions thereof.

Therefore, an object of the invention is to provide a work room by means of which said drawback entirely or partly is obviated.

The object is attained by the invention.

The invention is defined in the appended claim 1.

Embodiments of the invention are defined in the appended dependent claims, and in the following description of a preferred embodiment of the invention.
- Fig. 1: schematically shows a planar view of a mobile work room according to the invention in the expanded state.
- Fig. 2: shows a section taken along line II-II in fig. 1.
- Fig. 3: shows a section corresponding to fig. 2 in the contracted state of the room.

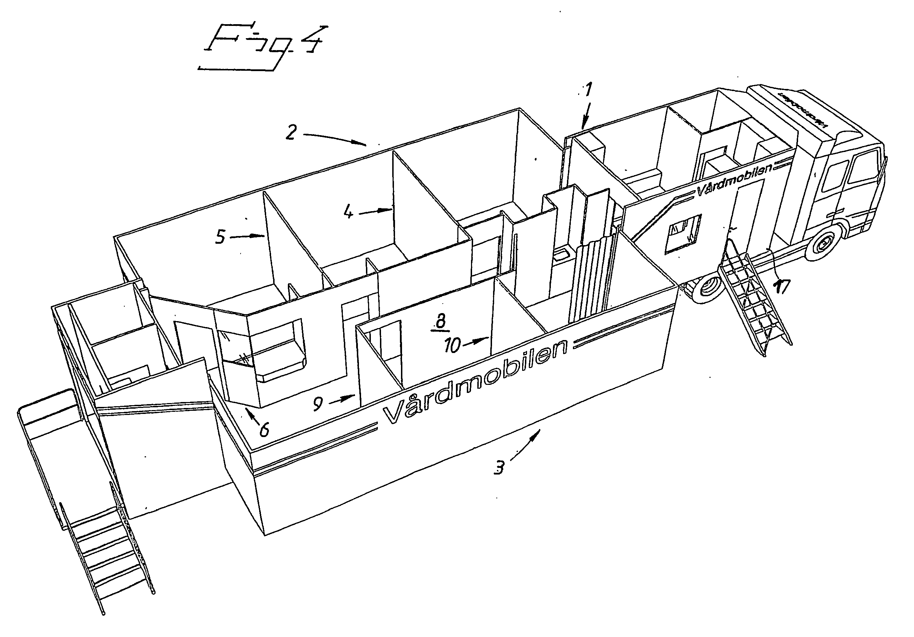

- Fig. 4: schematically shows a perspective view from above of the object of fig. 1.

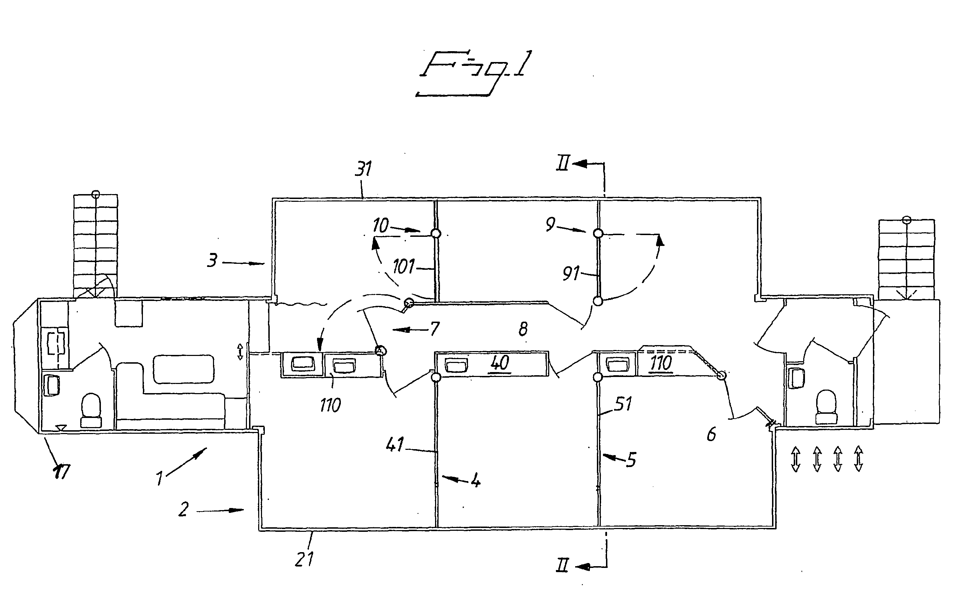

Fig. 1 illustrates schematically a work room, which in the example constitutes a medical mobile district health centre that is constructed on a trailer chassis. The room comprises a substantially orthogonal parallelepipedic basic structure 1, the.elongate vertical side walls of which have openings that sealingly receive laterally-positioned boxes 2, 3. The boxes are each substantially orthogonally parallelepipedic and have an open side facing the interior of the structure 1. The boxes have an outer vertical side wall 21 and 31, respectively, which in the contracted state of the room substantially coincide with the side wall surfaces of the basic structure 1, and in the expanded state are parallel to the side walls of the structure 1, but located at a distance outside these, as is seen in fig. 1. In the respective box 2, 3 there are partition walls 4, 5, 6 and 7, 8, 9, 10, respectively, which contain wall portions 41, 51, which are turnable around a laterally-positioned vertical axis, which also applies for the walls 7, 9, 10 and 8.

From fig. 1, it can be understood that the front and rear end walls of the boxes 2, 3 project into each other in the contracted state of the boxes 2, 3, and that at least the walls 4, 5 have an extension in the transverse direction that is larger than the traversing direction of the boxes 2, 3. Furthermore, it can be seen that fixed structures 40, 110 are mounted in a longitudinal central intermediate portion of the structure 1 and contain, for instance, discharge sinks including hydraulic fittings and sewers. At least the walls 4 and 5 extend up to these fixed structures. For that sake, at least the wall portions 41, 51 thereof, are turnable around said axes that may be located close by the fixed central structures, between the position shown in fig. 1, into a position wherein they extend substantially parallel to the longitudinal direction of the basic structure 1, so that the partition walls 4, 5 do not block the insertion of the box 2 into the basic structure 1. Concerning the box 3, it can be seen that the smaller transverse partition walls 9, 10 of the box 3 do not extend all the way up to the fixed centrally located structures, but that the partition wall structures 8, 101, 91 are correspondingly arranged foldable around vertical axes in order to be foldable away from the positions shown in fig. 1 so that they lie directed in the longitudinal direction of the basic structure, and near the outer side wall 31 of the box 2, so that the box 3 also can be inserted into the retracted position thereof, wherein the wall 31 substantially coincides with the side wall of the basic structure 1.

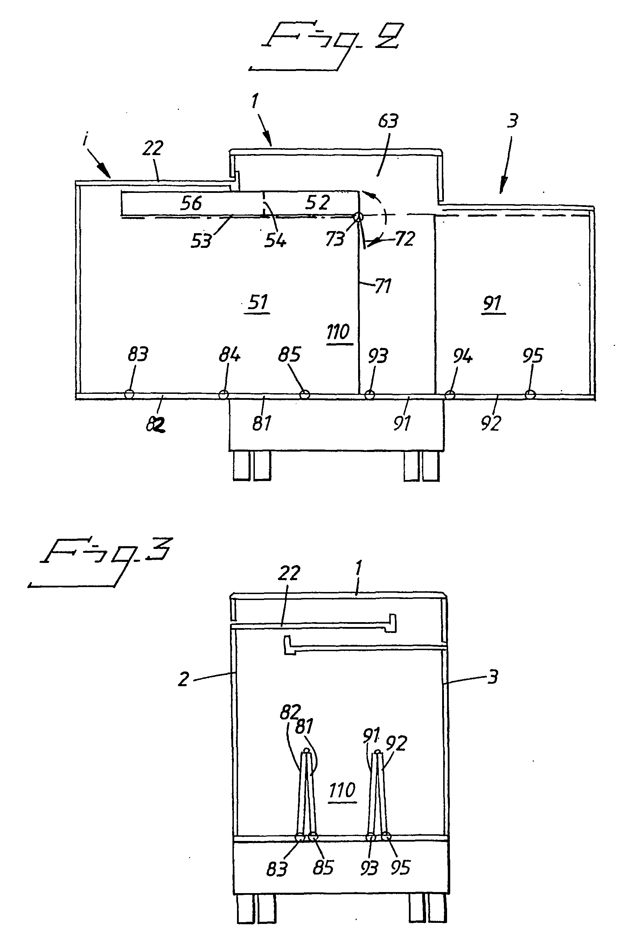

In that connection, at least the walls 4, 5 have an upper horizontal wall portion 56, 52, which is turnable around a horizontal pivot in the plane of the partition wall. Reference being made to fig. 2, where it can be seen that the hinge 53 lies on the level of the upper limitation of the fixed structure, and at a distance below the top wall 22 of the box 2, the wall elements 56, 52 having a height corresponding to the distance between the hinge 53 and the inside of the top wall 22 in order to fill out this gap. Since the shown elements 56, 52 suitably also should extend in over the fixed structure up to the far end wall surface thereof, which defines the side wall of the shown corridor, the wall elements 56, 52 are mutually turnably connected via a vertical hinge 54 between nearby side edges thereof, in the embodiment example, the horizontal hinge 53 solely extending along the horizontal length of the element 56 in order to allow the element 52 to be folded inwards towards the element 56.

Between the ceiling of the basic structure 1 and the upper verge of the ceiling elements 56, 52, a screening element 63 is provided, which may be foldingly connected via a hinge to the ceiling surface of the basic structure 1, as is illustrated in fig. 2.

In fig. 2, it is further shown that the corridor wall 71 of the fixed structure, at the upper edge thereof, has a wall element 72, which is foldable around a hinge 73 between a position, wherein the element 72 is lowered against the wall 71 and raised, respectively, and extends upward from the hinge 73 in order to define the corridor space to the left in fig. 2.

From fig. 1, it can further be understood that the wall part 91 is foldable around a vertical axis indicated by a circle, the wall 8 being articulately connected to the inner end of the wall part 91 and being releasable from the wall 10 in order to be foldable into positions that are parallel to and located near the side wall 31. Correspondingly, the wall 7 can be folded-in around a pivot into a position parallel to and near the corridor wall of the fixed structure. The partition wall part 91 is also turnable 90° from the position according to fig. 1, in order to, with the box 3, be inserted into the basic structure 1 into the indicated position.

From figs. 2 and 3, it can further be understood that the basic structure 1, and the boxes 2, 3 have a floor that is in a common plane, in the expanded state of the room, the floor on each side of the fixed structure comprising two equally wide portions 81, 82 and 91, 92, respectively, which are inter-linked via a horizontal pivoting hinge and have the spaced-apart edges thereof connected to fixed floor parts in the structure 1 and the respective box 2, 3 so that the floor plates 81, 82 as well as the floor plates 91, 92 can be folded upward and toward each other into the configuration shown in fig. 3, around the hinges 83-85 and 93-95 thereof, into a space that is left between the fixed structures and the folded partition walls, in the contracted state of the room (fig. 3).

In fig. 1, the front end of the trailer is indicated by 17.

## Claims

1. Expansible and contractible work room on a chassis supported by wheels, the work room comprising a substantially orthogonal parallelepipedic basic structure (1), which is carried by the chassis and which has an opening in each of two opposite vertical side walls (21, 31), each opening fittingly receiving an appurtenant orthogonal parallelepipedic box (2, 3), which is fittingly received in said opening of the basic structure and which is open toward the interior of the basic structure (1), each box (2, 3) being linearly displaceable between a retracted position, wherein the side wall (21, 31) of the box is situated near the side wall of the basic structure, and an extended position wherein the side wall of the box is parallel-displaced to a position at a distance outside the side wall of the basic structure, and inner vertical partition walls (4, 5, 9, 10) being provided inside the room and extending transverse to the longitudinal direction of the work room, wherein at least one of the vertical partition walls has a wall portion (41, 51, 101, 91) that is turnably carried by the basic structure or by the box for turning around a vertical axis near an intermediate length part of the basic structure for folding the wall portion substantially to parallelism with the side wall (21, 31) of the box in order to allow the respective box to be displaced into the inserted position thereof, **characterized in that** the partition wall has an upper verge that lies on a level with the top wall (22) of the box (2, 3), that the wall portion (51) is a lower wall element, which forms the main part of the partition wall, and that the wall comprises an upper wall element (52, 56), which is turnably connected to the upper verge of the lower wall element (51) via a hinge (53) having horizontal axis, in order to be foldable to and from sealing contact with the top wall (22) of the box.

2. Expansible and contractible work room according to claim 1, **characterized in that** the room on each side has a floor plate having three parallel hinge joints (83, 84, 85 and 93, 94, 95), respectively, extending in the longitudinal direction of the chassis, which hinge joints define two mutually raisable plate parts (81, 82 and 91, 92), which form parts of the horizontal floor, when the box is in the extended state, and which stand substantially vertically upward when the box (2, 3) is inserted in the basic structure.

3. Expansible and contractible work room according to claim 1 or 2, **characterized in that** the basic structure in the central intermediate length area thereof has a fixed structure (110) that extends in the longitudinal direction of the room, in the intermediate length part of the basic structure, the supporting structure comprising fixedly mounted equipment such as sink units including appurtenant pipes for water and drainage, as well as power points.

4. Expansible and contractible work room according to any one of claims 1-3, **characterized in that** the boxes (2, 3) are partially inserted in each other in the inserted positions of the boxes (2, 3).

5. Expansible and contractible work room according to any one of claims 1-4, **characterized in that** the upper partition wall elements (56), at one side edge thereof, are turnably connected via a vertical hinge (54) to a nearby upper wall element (52) of substantially the same height, which may be folded-out in order to upward screen a space above the upper limitation of the fixed basic structure, in the extended state of the box (2).

6. Expansible and contractible work room according to any one of claims 3-5, **characterized in that** the fixed structure (110) has a side wall that forms a corridor wall in the room, the corridor wall (71), in the upper verge thereof lying on the level of the hinge (53), being connected to a flap (72) via a hinge (73), which flap can be folded up in order to extend the corridor wall (71) upward to a level corresponding to the upper verge of the partition wall (5), and that a partition wall device (63) is arranged to screen, in the supporting structure, the space between the ceiling wall of the basic structure (1) and the upper verge of the partition wall (5).

## Patentansprüche

1. Ausdehnbarer und zusammenziehbarer Arbeitsraum auf einem von Rädern getragenen Fahrgestell, wobei der Arbeitsraum eine im Wesentlichen orthogonal parallelepipedische Grundkörperstruktur (1) umfasst, die von dem Fahrgestell getragen wird und die eine Öffnung in jeder von zwei gegenüberliegenden vertikalen Seitenwänden (21, 31) aufweist, wobei jede Öffnung passend eine dazugehörige orthogonale parallelepipedische Box (2, 3) aufnimmt, die passend in der Öffnung der Grundkörperstruktur aufgenommen ist und die in Richtung des Inneren der Grundkörperstruktur (1) offen ist, wobei jede Box (2, 3) zwischen einer eingefahrenen Position, in der die Seitenwand (21, 31) der Box in der Nähe der Seitenwand der Grundkörperstruktur angeordnet ist, und einer ausgefahrenen Position linear verschoben werden kann, in der die Seitenwand der Box zu einer Position in einem Abstand außerhalb der Seitenwand der Grundkörperstruktur parallel verschoben ist, sowie innere vertikale Trennwände (4, 5, 9, 10), die innerhalb des Raums bereitgestellt sind und sich quer zu der Längsrichtung des Arbeitsraums erstrecken, wobei wenigstens eine der vertikalen Trennwände einen Wandabschnitt (41, 51, 101, 91) aufweist, der drehbar von der Grundkörperstruktur oder der Box getragen wird, um um eine vertikale Achse in der Nähe eines Zwischenlängenteils der Grundkörperstruktur gedreht zu werden, um den Wandabschnitt im Wesentlichen in eine parallele Beziehung mit der Seitenwand (21, 31) der Box zu falten, um der jeweiligen Box zu ermöglichen, in deren eingeschobene Position verschoben zu werden, **dadurch gekennzeichnet, dass** die Trennwand einen oberen Rand aufweist, der auf gleicher Höhe mit der Deckenwand (22) der Box (2, 3) liegt, dass der Wandabschnitt (51) ein unteres Wandelement ist, das den Hauptteil der Trennwand ausbildet, und dass die Wand ein oberes Wandelement (52, 56) umfasst, das drehbar mit dem oberen Rand des unteren Wandelements (51) über ein Gelenk (53) verbunden ist, das eine horizontale Achse aufweist, um in eine abdichtende Berührung mit der Deckenwand (22) der Box gefaltet werden zu können und aus dieser wieder herausgefaltet werden zu können.

2. Ausdehnbarer und zusammenziehbarer Arbeitsraum gemäß Anspruch 1, **dadurch gekennzeichnet, dass** der Raum auf jeder Seite eine Bodenplatte aufweist, die jeweils drei parallele Gelenkverbindungen (83, 84, 85 und 93, 94, 95) aufweisen, die sich in der Längsrichtung des Fahrgestells erstrecken, wobei die Gelenkverbindungen zwei gegenseitig anhebbare Plattenteile (81, 82 und 91, 92) definieren, die Teile des horizontalen Bodens ausbilden, wenn sich die Box in dem ausgefahrenen Zustand befindet, und die im Wesentlichen vertikal aufrecht stehen, wenn die Box (2, 3) in die Grundkörperstruktur eingeführt ist.

3. Ausdehnbarer und zusammenziehbarer Arbeitsraum nach Anspruch 1 oder 2, **dadurch gekennzeichnet, dass** die Grundkörperstruktur in dem zentralen Zwischenlängenbereich davon eine feststehende Struktur (110) aufweist, die sich in der Längsrichtung des Raumes erstreckt, und zwar in dem Zwischenlängenteil der Grundkörperstruktur, wobei die Trägerstruktur eine feststehende angebrachte Ausstattung umfasst, wie beispielsweise Spülbeckeneinheiten, einschließlich dazugehöriger Leitungen für Wasser und Ablauf, sowie Steckdosen.

4. Ausdehnbarer und zusammenziehbarer Arbeitsraum nach einem der Ansprüche 1 bis 3, **dadurch gekennzeichnet, dass** die Boxen (2, 3) teilweise ineinander eingebracht sind, und zwar in den eingebrachten Positionen der Boxen (2, 3).

5. Ausdehnbarer und zusammenziehbarer Arbeitsraum nach einem der Ansprüche 1-4, **dadurch gekennzeichnet, dass** die oberen Trennwandelemente (56) an einer Seitenkante davon über ein vertikales Gelenk (54) mit einem nahe gelegenen oberen Wandelement (52) im Wesentlichen derselben Höhe drehbar verbunden sind, das herausgefaltet werden kann, um einen Raum oberhalb der oberen Begrenzung der feststehenden Grundkörperstruktur nach oben abzuschirmen, und zwar in dem ausgefahrenen Zustand der Box (2).

6. Ausdehnbarer und zusammenziehbarer Arbeitsraum nach einem der Ansprüche 3-5, **dadurch gekennzeichnet, dass** die feststehende Struktur (110) eine Seitenwand aufweist, die eine Korridorwand in dem Raum ausbildet, wobei die Korridorwand (71) in dem oberen Rand davon auf der Höhe des Gelenks (53) liegt, das mit einer Klappe (72) über ein Gelenk (73) verbunden ist, wobei die Klappe hochgefaltet werden kann, um die Korridorwand (71) nach oben bis zu einer Höhe auszufahren, die dem oberen Rand der Trennwand (5) entspricht, und dass eine Trennwandvorrichtung (63) angeordnet ist, um in der Trägerstruktur den Raum zwischen der Deckenwand der Grundkörperstruktur (1) und dem oberen Rand der Trennwand (5) abzuschirmen.

## Revendications

1. Enceinte de travail expansible et rétractable sur un châssis supporté par des roues, l'enceinte de travail comprenant une structure de base parallélépipédique sensiblement orthogonale (1), qui est supportée par le châssis et qui possède une ouverture dans chacune de deux parois latérales verticales opposées (21, 31), chaque ouverture recevant de façon serrée une boîte parallélépipédique orthogonale associée (2, 3), qui est reçue de façon serrée dans ladite ouverture de la structure de base et qui est ouverte vers l'intérieur de la structure de base (1), chaque boîte (2, 3) étant déplaçable linéairement entre une position rétractée, dans laquelle la paroi latérale (21, 31) de la boîte est située près de la paroi latérale de la structure de base, et une position étendue dans laquelle la paroi latérale de la boîte est déplacée parallèlement jusqu'à une position à une distance à l'extérieur de la paroi latérale de la structure de base, et des parois de séparation verticales intérieures (4, 5, 9, 10) prévues à l'intérieur de l'enceinte et s'étendant transversalement à la direction longitudinale de l'enceinte de travail, dans laquelle au moins une des parois de séparation verticales possède une partie de paroi (41, 51, 101, 91) qui est supportée de façon rotative par la structure de base ou par la boîte pour tourner autour d'un axe vertical près d'une partie de longueur intermédiaire de la structure de base pour plier la partie de paroi sensiblement en parallélisme avec la paroi latérale (21, 31) de la boîte afin de permettre à la boîte respective d'être déplacée dans la position insérée de celle-ci, **caractérisée en ce que** la paroi de séparation possède un rebord supérieur qui se trouve de niveau avec la paroi supérieure (22) de la boîte (2, 3), *que la partie de paroi (51) est un élément de paroi inférieure, qui forme la partie principale de la paroi de séparation, et que la paroi comprend un élément de paroi supérieure (52, 56), qui est relié de façon rotative au rebord supérieur de l'élément de paroi inférieure (51) par l'intermédiaire d'une articulation (53) possédant un axe horizontal, afin de pouvoir plier jusqu'à et à partir d'un contact hermétique avec la paroi supérieure (22) de la boîte.

2. Enceinte de travail expansible et rétractable selon la revendication 1, **caractérisée en ce que** l'enceinte sur chaque côté possède une plaque de plancher possédant trois joints d'articulation parallèles (83, 84, 85 et 93, 94, 95), respectivement, s'étendant dans la direction longitudinale du châssis, lesquels joints d'articulation définissent deux parties de plaque pouvant être mutuellement élevées (81, 82 et 91, 92), qui font partie du plancher horizontal, lorsque la boîte est dans l'état étendu, et qui se tiennent de façon sensiblement verticale lorsque la boîte (2, 3) est insérée dans la structure de base.

3. Enceinte de travail expansible et rétractable selon la revendication 1 ou 2, **caractérisée en ce que** la structure de base dans la zone de longueur intermédiaire centrale de celle-ci possède une structure fixe (110) qui s'étend dans la direction longitudinale de l'enceinte, dans la partie de longueur intermédiaire de la structure de base, la structure de support comprenant des équipements montés de façon fixe tels que des unités d'évier comprenant des tuyaux associés pour l'eau et le drainage, ainsi que des prises électriques.

4. Enceinte de travail expansible et rétractable selon l'une quelconque des revendications précédentes 1 à 3, **caractérisée en ce que** les boîtes (2, 3) sont partiellement insérées l'une dans l'autre dans les positions insérées des boîtes (2, 3).

5. Enceinte de travail expansible et rétractable selon l'une quelconque des revendications précédentes 1 à 4, **caractérisée en ce que** les éléments de paroi de séparation supérieure (56), au niveau d'un bord latéral de ceux-ci, sont reliés de façon rotative par l'intermédiaire d'une articulation verticale (54) à un élément voisin de paroi supérieure (52) de sensiblement la même hauteur, qui peut être déplié afin de séparer en hauteur un espace au-dessus de la limite supérieure de la structure de base fixe, dans l'état étendu de la boîte (2).

6. Enceinte de travail expansible et rétractable selon l'une quelconque des revendications précédentes 3 à 5, **caractérisée en ce que** la structure fixe (110) possède une paroi latérale qui forme une paroi de couloir dans l'enceinte, la paroi de couloir (71), dans le rebord supérieur de celle-ci se trouvant au niveau de l'articulation (53), étant reliée à un volet (72) par l'intermédiaire d'une articulation (73), lequel volet peut être plié afin d'étendre la paroi de couloir (71) vers le haut jusqu'à un niveau correspondant au rebord supérieur de la paroi de séparation (5), et qu'un dispositif de paroi de séparation (63) est agencé pour séparer, dans la structure de support, l'espace entre la paroi de plafond de la structure de base (1) et le rebord supérieur de la paroi de séparation (5).
